# EUROPÄISCHE PATENTSCHRIFT

(11) **EP 2 613 896 B1**
(45) Veröffentlichungstag und Bekanntmachung des Hinweises auf die Patenterteilung: **02.03.2016**
(21) Anmeldenummer: 11754383.5
(22) Anmeldetag: 06.09.2011
(51) Int. Cl.: B21B 1/38, B23K 20/04, B21B 47/04

(54) **VERFAHREN ZUR HERSTELLUNG MINDESTENS EINES PLATTIERTEN BANDES ODER BLECHES**
METHOD FOR PRODUCING AT LEAST ONE CLAD STRIP OR SHEET
PROCÉDÉ DE FABRICATION D'AU MOINS UNE TÔLE PLAQUÉE OU UN FEUILLARD PLAQUÉ

(30) Priorität: 10.09.2010 DE 102010045011
(43) Veröffentlichungstag der Anmeldung: 17.07.2013
(73) Patentinhaber: Wickeder Westfalenstahl GmbH, 58739 Wickede / Ruhr (DE)
(72) Erfinder: KÖHLER, Matthias, 59519 Möhnesee-Völlinghausen (DE); ERLEMEYER, Jens, 58638 Iserlohn (DE)
(74) Vertreter: Brune, Axel
(86) Internationale Anmeldenummer: PCT/EP2011/065411
(87) Internationale Veröffentlichungsnummer: WO 2012/032061

(56) Entgegenhaltungen:
- DE-B3- 10 258 824
- JP-A- 55 070 490
- US-B1- 6 413 651

## Beschreibung

Die vorliegende Erfindung betrifft ein Verfahren zur Herstellung mindestens eines plattierten Bandes oder Blechs gemäß dem Oberbegriff des Anspruchs 1, siehe z.B. JP-A 55070490.

Es sind Bänder bekannt, die quer zur Längsrichtung unterschiedliche Dicken aufweisen. Die vorgenannten Bänder können durch unterschiedliche Herstellungsverfahren hergestellt werden.

Eine erste Variante besteht beispielsweise darin, ein ursprünglich quer zur Längsrichtung (Walzrichtung) gleichdickes Band abschnittsweise in Längsrichtung abzufräsen. Im Ergebnis ergibt sich ein Band mit unterschiedlichen Dicken quer zur Längsrichtung.

Eine zweite Variante besteht beispielsweise darin ein Trägerband und mindestens ein weiteres Auflageband mit unterschiedlichen Breiten miteinander zu verbinden, beispielsweise zu plattieren. Im Ergebnis ergibt sich ebenfalls ein Band mit unterschiedlichen Dicken quer zur Längsrichtung.

In DE 102 58 824 B3 wird ein derartiges Verfahren zur Herstellung eines Bandes mit einem in dessen Querschnitt verlaufenden Stufenprofil vorgeschlagen, das im Wesentlichen darauf beruht, das Stufenprofil durch Plattieren einer Anordnung von Bändern auf einem Trägerband herzustellen, wobei Lücken in diesem Profil durch Füllbänder zu einem rechteckigen Querschnitt ergänzt werden, wobei deren Werkstoff vorzugsweise so gewählt ist, dass die Füllbänder schwächer auf dem Trägerband haften und von diesem durch Abziehen wieder entfernt werden können.

Die Nachteile dieses Verfahrens bestehen darin, dass die zum Auffüllen verwendeten Füllbänder im beschriebenen Prozess eine Dickenreduktion erfahren und somit nicht wiederverwendet werden können, mit den entsprechend negativen Auswirkungen auf die Wirtschaftlichkeit des Verfahrens. Welche Werkstoffe eine nur schwache Bindung bewirken wird nicht näher beschrieben, es ist aber sicherlich davon auszugehen dass nur eine eingeschränkte Auswahl an Materialien den gestellten Anforderungen genügt. Es können ferner Zweifel aufkommen, ob im Falle eines Kaltwalzplattierprozesses ein Abziehen der Füllbänder direkt nach dem Plattieren technologisch überhaupt prozesssicher möglich ist, da es durch die unvermeidbare Breitung der Bänder zu einem Kraftschluss zwischen dem "gewünschten" Band und den Füllbändern kommen kann. Da ohne Wärmebehandlung direkt nach dem Kaltwalzplattieren immer nur eine partielle Haftung vorliegt, besteht die Gefahr, beim Abziehen auch Teile der gewollt haftenden Bereiche zu verletzen. Ein denkbares Abziehen nach einer Wärmebehandlung würde die Materialauswahl für die Füllbänder zudem noch deutlich weiter einschränken.

Hier setzt die vorliegende Erfindung an und macht es sich zur Aufgabe, ein verbessertes Plattierverfahren zur Herstellung mindestens eines plattierten Bandes vorzuschlagen, insbesondere ein Verfahren vorzuschlagen, welches mit weniger Materialverlust auskommt.

Erfindungsgemäß wird diese Aufgabe durch ein Verfahren mit den Merkmalen des Anspruchs 1 gelöst.

Dadurch, dass zwei Band- oder Blechanordnungen zu einem im Querschnitt rechteckförmigen oder zumindest annähernd rechteckförmigen ersten Zwischenprodukt zusammengefügt werden, welches im Wesentlichen wie ein herkömmliches Band oder Blech bearbeitet, insbesondere gewalzt werden kann, kann ein zweites Zwischenprodukt entstehen, welches zwei plattierte Bänder bzw. Bleche umfasst, die in einem nachfolgenden Verfahrensschritt getrennt werden können. Anders ausgedrückt, es werden zwei Bänder bzw. Bleche mit gestuftem Querschnittprofil in einem gemeinsamen Plattierprozess hergestellt. Hieraus ergibt sich bereits eine Reduzierung der Produktionszeit und der Produktionskosten. Ferner kommt das Verfahren grundsätzlich ohne ein Füllband bzw. Füllbänder aus, da die zwei Band- oder Blechanordnungen, aus denen die zwei plattierten Bänder bzw. Bleche hergestellt werden, zu einem im Querschnitt rechteckförmigen ersten Zwischenprodukt zusammengefügt werden, so dass die mindestens zwei Auflagebänder zwischen den Trägerbändern angeordnet sind. Dieses erste Zwischenprodukt kann wie ein herkömmliches Band oder Blech einem geeigneten Plattierverfahren, beispielsweise einem Walzen, insbesondere einem Kaltwalzen, zugeführt werden. Nach dem Walzen werden die beiden plattieren Bänder bzw. Bleche voneinander getrennt. Da grundsätzlich keine Füllbänder eingesetzt werden müssen, ist der Materialverlust ebenfalls reduziert.

Weitere vorteilhafte Ausgestaltungen der vorgeschlagenen Erfindung ergeben sich insbesondere aus den Merkmalen der Unteransprüche. Die Merkmale der verschiedenen Ansprüche können grundsätzlich beliebig miteinander kombiniert werden.

Es kann beispielsweise vorteilhafterweise vorgesehen sein, dass als Material des Trägerbandes und/oder des Auflagebandes Stahl oder Stahllegierungen, Kupfer oder Kupferlegierungen, Edelmetalle oder Edelmetalllegierungen, Aluminium oder Aluminiumlegierungen und/oder Nickel oder Nickellegierungen verwendet werden. Stahl und Aluminium sowie deren Legierungen können dabei als relativ preisgünstige und leistungsfähige Konstruktionswerkstoffe fungieren, die bestimmte mechanisch-technologischen Eigenschaften, wie z.B. hohe Festigkeit oder Steifigkeit bei gleichzeitig guter Umformbarkeit, in ein nach dem erfindungsgemäßen Verfahren hergestelltes plattiertes Halbzeug einbringen. Kupfer-, Nickel-, und Aluminiumwerkstoffe sowie Edelmetalle können zur Erzielung hoher thermischer oder elektrischer Leitfähigkeit sowie guter elektrischer Kontakteigenschaften Verwendung finden. Kupfer-, Nickel- und Aluminiumwerkstoffe sowie Edelmetalle und korrosionsbeständige Stahllegierungen können die chemische Beständigkeit in bestimmten Milieus sicherstellen.

Es kann ferner vorteilhafterweise vorgesehen sein, dass mindestens ein Trägerband oder Auflageband aus einem anderen Material als die übrigen Trägerbänder oder Auflagebänder besteht. Durch diese Maßnahme können Eigenschaften des resultierenden plattieren Bandes über die Materialauswahl eingestellt werden. Auch in Querrichtung können, beispielsweise durch geeignete Materialauswahl eines oder mehrerer Auflagebänder, unterschiedliche Eigenschaften in Querrichtung des plattieren Bandes oder Bleches eingestellt werden.

In einer weiteren vorteilhaften Ausgestaltung des vorgeschlagenen Verfahrens kann beispielsweise vorgesehen sein, dass es sich bei dem Plattieren um Walzplattieren, vorzugsweise um Kaltwalzplattieren, ggf. mit zusätzlichen Maßnahmen wie Band- bzw. Blechvorwärmung, handelt. Walzplattierverfahren werden normalerweise zur Herstellung kontinuierlicher Bänder eingesetzt und zeichnen sich daher im Allgemeinen gegenüber diskontinuierlichen Verfahren wie dem Sprengplattieren durch größere Wirtschaftlichkeit aus, insbesondere wenn auf das Sprengplattieren noch ein Warm- und ggf. auch noch ein Kaltwalzen zur Dickenreduktion folgt. Gegenüber dem Warmwalzplattieren eröffnet das Kaltwalzplattieren zudem noch eine deutlich größere Flexibilität bei der Auswahl der miteinander zu verbindenden Werkstoffe, da die zur Erzeugung der maximalen Haftfestigkeit notwendigen Schritte Umformung und Wärmebehandlung hier getrennt ablaufen, was eine deutlich bessere Anpassung der Prozessparameter auf die Erfordernisse der beteiligten Werkstoffe ermöglicht. Wird das Kaltwalzplattieren zudem mit Maßnahmen zur Band- oder Blechvorwärmung kombiniert, so erweitert sich das mögliche Materialspektrum noch weiter, z.B. auf Güten, die erst ab einer gewissen Mindesttemperatur eine zum Kaltwalzplattieren ausreichende Duktilität besitzen. Zudem kann so der Haftungsaufbau während des Plattierschritts verbessert werden.

In einer besonders vorteilhaften Ausgestaltung des vorgeschlagenen Verfahrens kann vorgesehen sein, dass die erste Band- oder Blechanordnung und die zweite Band- oder Blechanordnung mindestens in einem Randbereich verbunden werden. Die Verbindung erfolgt vorteilhafterweise während es Plattierens und grundsätzlich unabhängig von der Verbindung zwischen dem Trägerband und dem bzw. den zugeordneten Auflagebändern. Durch die Verbindung von erster und zweiter Band- oder Blechanordnung in einem Randbereich wird eine hohe Prozesssicherheit des Verfahrens und Maßhaltigkeit der erzeugten plattierten Bänder bzw. Bleche sichergestellt. Es wird beispielsweise vermieden, dass die Band- oder Blechanordnungen seitlich auseinanderdriften. Derart verbundene Band- oder Blechanordnungen kommen einem "massiven" Band hinsichtlich seiner Eigenschaften während des Plattierprozesses sehr nahe, so dass grundsätzlich keine speziellen Plattiergerüste eingesetzt werden müssen.

In einer weiteren vorteilhaften Ausgestaltung des erfindungsgemäßen Verfahrens kann vorgesehen sein, dass die erste Band- oder Blechanordnung und/oder die zweite Band- oder Blechanordnung mindestens teilweise, vorzugsweise in einem Randbereich, mit einem Haftvermittler beschichtet wird. Durch die Auftragung eines entsprechend geeigneten Haftvermittlers kann die oben beschriebene Verbindung der Band- oder Blechanordnungen gezielt vorgenommen werden.

Ebenso kann vorzugsweise vorgesehen sein, dass die erste Band- oder Blechanordnung und/oder die zweite Band- oder Blechanordnung mindestens teilweise, vorzugsweise in einem zentralen Bereich, mit einem Trennmittel beschichtet wird. Hierdurch kann die Trennung der plattierten Bänder bzw. Bleche nach dem Plattiervorgang erleichtert werden. Insbesondere in Zusammenschau mit dem Haftvermittler kann das erste Zwischenprodukt optimal auf den Plattiervorgang und auch den späteren Trennvorgang vorbereitet werden. Wenn beispielsweise die Trennung des zweiten Zwischenproduktes durch Abtrennen der verbindenden Randbereich eingeleitet wird, sorgt das Trennmittel insbesondere dafür, dass die Trennung der plattierten Bänder bzw. Bleche unproblematisch vorgenommen werden kann.

Es kann ferner vorzugsweise vorgesehen sein, dass lokale Lücken in dem mit Trennmittel beschichteten Bereich erzeugt werden. Durch diese Maßnahme kann eine zusätzliche oder auch alternative Haftung der Band- oder Blechanordnungen erzielt werden, beispielsweise wenn die Verbindung in den Randbereichen, insbesondere den mit Haftvermittlern beschichteten Bereichen, nicht ausreichend ist. Insofern können die lokalen Lücken dazu beitragen, dass sich die Band- oder Blechanordnungen auch während des Plattierens in den Bereichen der lokalen Lücken verbinden, insbesondere lösbar verbinden, so dass ein höherer Zusammenhalt, beispielsweise in einem dem Plattieren nachgelagerten Wärmebehandlungsverfahren, erzielt werden kann.

In einer weiteren vorteilhaften Ausgestaltung des vorgeschlagenen Verfahrens kann vorgesehen sein, dass die zugewandten Oberflächen der Band- oder Blechanordnungen vor dem Plattieren zumindest abschnittsweise, insbesondere in den nicht mit Trennmittel beschichteten Bereichen, eine mindestens saubere und fettfreie, vorzugsweise zusätzlich durch Schleifen, Bürsten oder Strahlen, aktivierte Oberfläche aufweisen. Dies dient insbesondere der Entfernung oder Minimierung von Oberflächenschichten wie z.B. Adsorbaten oder Oxiden, die sich normalerweise negativ auf die beim Plattieren erzielbare Haftfestigkeit auswirken. Abrasive Oberflächenbehandlungen werden zudem genutzt, um die zu verbindenden Flächen aufzurauen, was durch eine Vergrößerung der effektiven Kontaktflächen eine Erhöhung der Haftfestigkeiten bewirken kann.

In einer weiteren vorteilhaften Ausgestaltung des vorgeschlagenen Verfahrens kann vorgesehen sein, dass die Trennmittelbeschichtung in einem Abschnitt des ersten Zwischenproduktes, welcher zu allererst dem Plattierprozess zugeführt wird, durchgängig unterbrochen ist, so dass Haftung zwischen allen Bestandteilen des ersten Zwischenproduktes in diesem Abschnitt erzeugt wird. Auf diese Art und Weise kann gewissermaßen ein Anfangsbereich des plattierten zweiten Zwischenproduktes geschaffen werden, der eine Maßhaltigkeit der Band- oder Blechanordnungen insbesondere in Längsrichtung bzw. Walzrichtung sicherstellen kann.

Es kann vorteilhafterweise vorgesehen sein, dass die Bestandteile des ersten Zwischenprodukt vor dem Plattieren durch thermisches Fügen, insbesondere Schweißen, an mindestens einer Stelle fixiert oder verbunden werden. Dadurch kann insbesondere ein Auseinanderdriften der Bestandteile während des Plattierprozesses vermieden werden. Dies ist insbesondere beim Warmwalzplattieren erforderlich, da hier keine Bandführung durch Vor- oder Rückzüge möglich ist. Beim Warmwalzplattieren von Werkstoffen, die unter Warmwalzbedingungen zu Verzunderung neigen, also insbesondere bei Stählen, kann durch luftdichtes Verschweißen der Außenkanten der zu verbindenden Bestandteile, insbesondere einhergehend mit einem Evakuieren der Innenbereiche, eine Haftungsminderung durch Verzundern der Kontaktflächen vermieden werden.

In einer weiteren vorteilhaften Ausgestaltung der Erfindung kann vorgesehen sein, dass das Trennmittel 7 Modifikationen des Kohlenstoffs, z.B. Graphit, und/oder keramische Pulver, z.B. Oxide, Nitride oder Carbide von Al, Si, B oder Refraktärmetallen, auch in Mischung mit zum Auftragen benötigten Hilfsstoffen, aufweist. Die genannten Trennmittel sind insbesondere in der Lage, den bei Plattierung und/oder Wärmebehandlung auftretenden Drücken und Temperaturen zu widerstehen und sind zudem chemisch ausreichend inert, um eine Trennwirkung zu entfalten ohne mit den zu trennenden Werkstoffen in erhöhtem Maße zu reagieren oder unter Temperatureinfluss Gase freizusetzen, was zur Bildung von unerwünschten Blasen im zweiten Zwischenprodukt führen würde. Bei den Hilfsstoffen kann es sich um Flüssigkeiten zur Erzeugung einer gewünschten flüssigen oder pastösen Konsistenz handeln, z.B. Wasser, Alkohole oder Lösungsmittel, ggf. in Kombination mit geeigneten Dispergier- und/oder Verdickungsmitteln, sowie um weitere Stoffe zur Verbesserung des Auftragsverhaltens, wie beispielsweise Tenside, Entschäumer oder Bindemittel.

Vorteilhafterweise kann weiterhin vorgesehen sein, dass es sich bei dem Trennmittel um natürlich vorhandene oder partiell gezielt erzeugte Reaktionsprodukte der Band- oder Blechoberfläche mit einer reaktiven Atmosphäre (z.B. Luft) handelt. Dadurch kann insbesondere ein gesonderter Trennmittelauftrag entfallen und durch eine Oberflächenbehandlung ersetzt werden, beispielsweise in Form einer lokalen Wärmebehandlung mit Hilfe eines Lasers. Da dazu im Prozess kein gesondertes Trennmittel benötigt wird, können sich daraus logistische und wirtschaftliche Vorteile ergeben.

In einer weiteren vorteilhaften Ausgestaltung der Erfindung kann vorgesehen sein, dass das Trägerband und/oder das Auflageband zumindest abschnittsweise mit Korrosionsschutzmitteln und/oder Haftvermittlern beschichtet werden.

In einer weiteren vorteilhaften Ausgestaltung der Erfindung kann vorgesehen sein, dass das Auftragen des Trennmittels und/oder des Haftvermittlers durch Sprühen, ggf. in Verbindung mit einer Schattenmaske, durch partielles Bandbeschichten und/oder durch Druckverfahren wie z.B. Siebdruck, vorgenommen wird. Durch diese Verfahren können insbesondere ausreichend geschlossene und örtlich begrenzte Trennmittelschichten auf Oberflächen der Blechanordnungen aufgebracht werden. Dabei lässt sich insbesondere eine Sprühvorrichtung in Kombination mit einer Schattenmaske anlagentechnisch besonders einfach realisieren, bei im Vergleich zu anderen Verfahren nur mäßiger erzielbarer Konturschärfe und Gleichmäßigkeit der Schichtdicke. Eine Bandbeschichtung, bei der das Trennmittel z.B. über eine strukturierte Transferwalze nur auf Teile der Oberflächen aufgebracht wird, ist hinsichtlich des erzielbaren Flächendurchsatzes als besonders leistungsfähig einzustufen, während Siebdrucktechniken eine besonders gut definierte und gleichmäßige Trennmittelmenge (abhängig von Maschenweite und Fadenstärke des verwendeten Siebs) bei gleichzeitig guter Konturschärfe aufbringen können.

Vorteilhafterweise kann vorgesehen sein, dass das zweite Zwischenprodukt vor der Trennung (Verfahrensschritt (e)) mindestens einem für metallische Bänder oder Bleche üblichen Verarbeitungsschritt unterzogen wird, insbesondere Warmwalzen, Kaltwalzen und/oder Wärmebehandeln. Es eröffnet sich die Möglichkeit in einem Zwischenschritt, nach dem Plattieren und vor dem Auftrennen des zweiten Zwischenproduktes, beispielsweise eine gemeinsame Wärmebehandlung der zwei plattierten Bänder bzw. Bleche vorzunehmen. Dies kann sich unter anderem anbieten, da einerseits eine Maßhaltigkeit der Bänder bzw. Bleche durch die immer noch bestehende Verbindung im Randbereich besser gewährleistet werden kann. Ferner können auch hier zwei plattierte Bänder oder Bleche in einem Verarbeitungsschritt beispielsweise einer Wärmebehandlung unterzogen werden. Insbesondere kann das zweite plattierte Zwischenprodukt aufgrund seines rechteckigen oder im Wesentlichen rechteckigen Querschnittprofils analog zu einem homogenen Band oder Blech einem flexiblen Walzprozess unterzogen werden, wobei durch spezielle Regelalgorithmen ein gewünschtes Profil der Blechdicke in Walzrichtung erzeugt wird. Durch die Kombination mit verbundenen Randbereichen kann ein Auseinanderlaufen der beiden Band- oder Blechanordnungen während des Walzens vermieden werden. Durch das flexible Walzen entstehen nach Trennung der beiden plattierten Band- oder Blechanordnungen zwei Bänder oder Bleche, die sowohl in Walzrichtung als auch senkrecht dazu ein definiertes Dickenprofil aufweisen. Ein derartiges Halbzeug eignet sich in besonderem Maße zur Herstellung gewichtsreduzierter Bauteile, bei denen Abschnitte mit größerer Dicke und/oder höherer Festigkeit an Stellen besonders hoher Bauteilbelastung platziert werden können, etwa für den Fahrzeugbau oder für Anwendungen in der Luft- und Raumfahrt.

Es kann ferner vorteilhafterweise vorgesehen sein, dass dem Trenn- und/oder Haftvermittler reaktive Bestandteile (z.B. metallische Pulver, insbesondere Refraktärmetalle) beigesetzt werden, die in der Lage sind, während einer Wärmebehandlung Restgase (beispielsweise O₂, N₂, CO₂, H₂O) zumindest partiell chemisch zu binden. Dadurch kann insbesondere vermieden werden, dass sich während einer Wärmebehandlung des zweiten Zwischenprodukts unerwünschten Blasen durch Freisetzung und Ausdehnung von Restgasen bilden.

In einer weiteren vorteilhaften Ausgestaltung des erfindungsgemäßen Verfahrens kann vorgesehen sein, dass der Trennung des zweiten Zwischenproduktes eine Abtrennung der verbundenen Randbereiche vorausgeht. Durch diese Maßnahme lässt sich das zweite Zwischenprodukt sehr einfach in die gewünschten Bestandteile, sprich das erste plattierte Band bzw. Blech und das zweite plattierte Band bzw. Blech, teilen.

Auch kann vorteilhafterweise vorgesehen sein, dass mindestens ein weiteres Band oder Blech, insbesondere weitere Bänder oder Bleche, ggf. auch vorbeschichtete und/oder vorplattierte Bänder oder Bleche Bestandteil des ersten Zwischenproduktes sind, die beispielsweise als Haftvermittler beim Plattieren und/oder als zusätzliche Funktionsschichten dienen können. Die Funktionsschichten können beispielsweise als Korrosionsschutzschicht oder Diffusionssperre während einer Wärmebehandlung zur Unterdrückung der Bildung unerwünschter intermetallischer Phasen dienen. Durch die weiteren Bänder oder Bleche, die Bestandteil des ersten Zwischenproduktes sind und als Haftvermittler beim Plattieren dienen, kann insbesondere die Verbindung der Band- oder Blechanordnungen gezielt vorgenommen werden.

Es kann weiterhin vorteilhafterweise vorgesehen sein, dass die Trägerbänder und die Auflagebänder dem Plattierprozess von jeweils einem Haspel zugeführt werden. So können beispielsweise unterschiedliche Einlaufgeschwindigkeiten, wie sie beim Kaltwalzplattieren unterschiedlicher Bandwerkstoffe typisch sind, ausgeglichen und prozessgerechte Bandzüge je nach Bedarf an einzelnen Streifen aufgebracht werden. Insbesondere wird so ermöglicht, den Massenfluss der einzelnen Bänder zu beeinflussen, so dass Abweichungen vom rechteckigen Querschnitt des zweiten Zwischenprodukts ausgeglichen werden können.

In einer weiteren vorteilhaften Ausgestaltung des vorgeschlagenen Verfahrens kann vorgesehen sein, dass mindestens zwei Bänder des ersten Zwischenproduktes, vorzugsweise mindestens zwei Auflagebänder, von einem gemeinsamen Haspel zugeführt werden. Dadurch können insbesondere größere Modifikationen, wie z.B. die Erweiterung um zusätzliche Haspel, an bestehenden Plattiergerüsten vermieden werden. Dabei sollte allerdings für eine stabile Prozessführung sichergestellt werden, dass über die Prozessdauer keine Akkumulation von kleinen Längenunterschieden auftritt, was sich z.B. durch unterschiedliche Wickelzüge der mindestens zwei Bänder aufgrund abweichender elastischer Längung einstellen könnte.

Auch kann vorteilhafterweise vorgesehen sein, dass die Auflagebänder erst kurz vor dem Plattieren durch Längsteilen in Linie aus einem breiteren Auflageband erzeugt werden. Somit entfällt insbesondere sowohl die Notwendigkeit zusätzlicher Haspel als auch der ansonsten erforderliche zusätzliche Arbeitsschritt der Bereitstellung mehrerer Bänder auf einem Haspel. Zusätzlich verbessert sich die Seitenführung, was die Gefahr eines seitlichen Verlaufens während des Plattierprozesses vermindert. Ebenso wäre es denkbar, die Längsteilung nicht durchgehend zu gestalten, und zwar entweder durch sehr kurze nicht getrennte Bereiche in Walzrichtung, oder durch eine nicht vollständige Separation senkrecht zur Bandoberfläche. Diese Maßnahmen hätten den Vorteil, einer eventuell bestehenden Tendenz des Auseinanderdriftens der Kernbandstreifen beim Plattieren entgegenzuwirken ohne die Separation des zweiten Zwischenprodukts Z2 in die zwei plattierten Bänder P1 und P2 wesentlich zu behindern.

In einer vorteilhaften Ausgestaltung des vorgeschlagenen Verfahrens kann vorgesehen sein, dass die Dicken der Auflagebänder so gewählt sind, dass sie vor dem Plattieren um maximal 30%, vorzugsweise maximal 20%, von ihrem Mittelwert abweichen (Streuung von maximal 30% um den Mittelwert). Beim gleichzeitigen Walzplattieren, insbesondere Kaltwalzplattieren, von unterschiedlichen Werkstoffen kommt es typischerweise zu gewissen festigkeitsabhängigen Abweichungen der durch den Plattierprozess bewirkten Umformgrade, genauer zu einer Verringerung der Dickenänderung festerer Werkstoffe bei gleichzeitiger Erhöhung der Dickenänderung weniger fester Werkstoffe. Dadurch können sich die relativen Dicken einzelner Lagen, bezogen auf die gesamte Dicke aller zu einem Zeitpunkt vorhandenen Lagen, zwischen Einlauf und Auslauf eines Plattierprozesses verschieben. Dieser Effekt tritt analog in dem erfindungsgemäßen Verfahren auf und muss insbesondere dann besonders berücksichtigt werden, wenn mindestens ein Auflageband aus einem anderen Material besteht als die übrigen Auflagebänder. In diesem Fall sollten, um nach dem Plattieren ein zweites Zwischenprodukt mit weitgehend rechteckigem Querschnitt zu erhalten, die Dicken der Auflagebänder im ersten Zwischenprodukt entsprechend der jeweils zu erwartenden Dickenänderungen so gewählt werden, dass die aus dem Plattierprozess resultierenden Dicken der Auflagebänder sich im Wesentlichen gleichen. Die resultierende Abweichung des ersten Zwischenprodukts von einem rechteckigen Querschnitt kann prozesstechnisch dann in Kauf genommen werden, wenn die Dicken der Auflagebänder im ersten Zwischenprodukt um maximal 30%, vorzugsweise maximal 20%, von ihrem Mittelwert abweichen.

In einer weiteren vorteilhaften Ausgestaltung des vorgeschlagenen Verfahrens kann vorgesehen sein, dass die Dicken der Auflagebänder in dem zweiten Zwischenprodukt bzw. plattierten Band bzw. Blech vor dem Plattieren so gewählt sind, dass sie nach dem Plattieren nur noch unwesentlich, vorzugsweise maximal 10%, insbesondere maximal 5%, vom Mittelwert abweichen (Streuung von maximal 10% um den Mittelwert). Die aus dem Plattierprozess resultierenden Dicken der Auflagebänder im zweiten Zwischenprodukt sollten, insbesondere für die Weiterverarbeitung durch Walzen, um maximal 10%, vorzugsweise maximal 5%, von ihrem Mittelwert abweichen.

Eine weitere vorteilhafte Ausgestaltung des erfindungsgemäßen Verfahrens kann beispielsweise darin bestehen, dass das zweite Zwischenprodukt oder das erste plattierte Band und/oder das mindestens zweite plattierte Band in Längsrichtung geteilt werden. Insofern kann ein weiterer Produktionsvorteil erzielt werden, da mehrere gewünschte plattierte Bänder nicht nur übereinander, sondern auch nebeneinander hergestellt werden können. Eine Band- oder Blechanordnung wird gewissermaßen bereits so angelegt, dass das gewünschte Querschnittsprofil bereits mindestens zweimal nebeneinander vorliegt. Ein derartiges plattiertes Band würde dann beispielsweise durch Längsteilung in mindestens zwei entsprechende plattierte Teilbänder geteilt.

Es kann vorteilhafterweise vorgesehen sein, dass das Längsteilen und/oder das Abtrennen der Randbereiche durch Rollmesser oder durch Laserstrahlschneiden erfolgt. Derartige Trennverfahren bieten sich insbesondere für eine kontinuierliche Abtrennung der Randbereiche nach einem ebenfalls kontinuierlich ablaufenden Plattierverfahren, wie beispielsweise dem Walzplattieren, an. So könnte das Besäumen in Linie mit dem Plattieren, oder aber auch ganz am Schluss nach z.B. zwischengeschalteten Walz- oder Glühschritten erfolgen.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
Fig. 1 eine Band- oder Blechanordnung mit Füllbändern vor dem Plattieren gemäß dem Stand der Technik;
Fig. 2 eine Band- oder Blechanordnung mit Füllbändern nach dem Plattieren gemäß dem Stand der Technik;
Fig. 3 eine Band- oder Blechanordnung ohne Füllbänder nach dem Plattieren gemäß dem Stand der Technik;
Fig. 4 eine erste Band- oder Blechanordnung und eine zweite Band- oder Blechanordnung gemäß dem erfindungsgemäßen Verfahren (Verfahrensschritt a und b);
Fig. 5 ein erstes Zwischenprodukt gemäß dem erfindungsgemäßen Verfahren (Verfahrensschritt c);

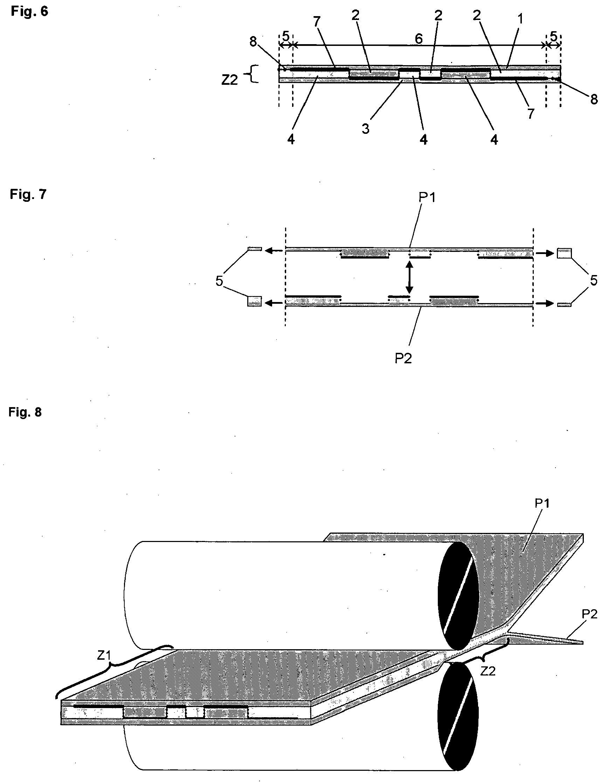

Fig. 6 ein zweites Zwischenprodukt gemäß dem erfindungsgemäßen Verfahren (Verfahrensschritt d);
Fig. 7 eine erstes plattiertes Band und ein zweites plattiertes Band gemäß dem erfindungsgemäßen Verfahren (Verfahrensschritt e);
Fig. 8 eine schematische Darstellung des Walzplattierens eines ersten Zwischenproduktes;
Fig. 9 Trennen einer zweiten Band- oder Blechanordnung in mehrere nebeneinander angeordnete Teilbänder oder -Bleche am Beispiel Laserschneiden;
Fig. 10 ein zweites Zwischenprodukt mit unterschiedlichen Dicken in Längsrichtung bzw. Walzrichtung.

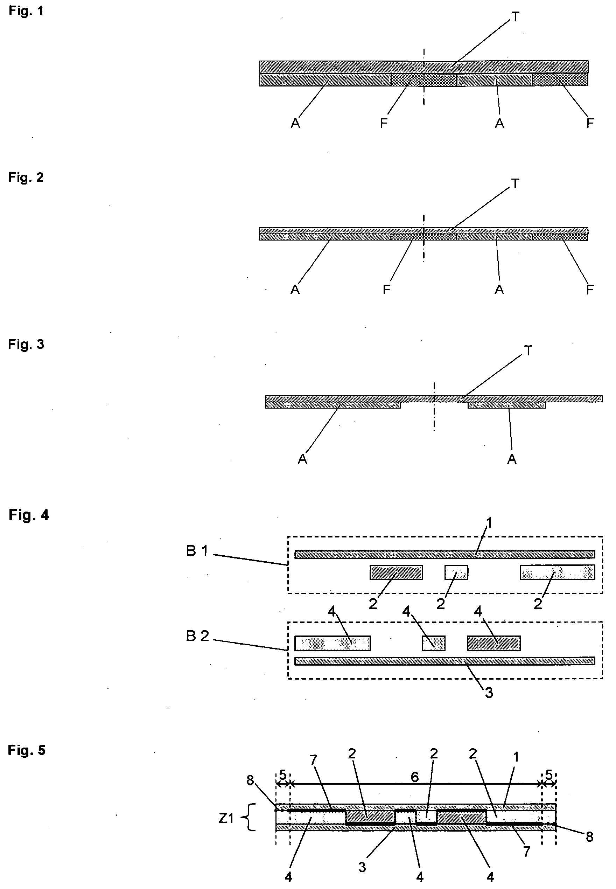

Folgende Bezugszeichen werden in den Zeichnungen verwendet:
Stand der Technik (Fig. 1 bis 3)
T Trägerband
A Auflageband
F Füllband
Erfindung
1 Trägerband
2 Auflageband
3 Trägerband
4 Auflageband
5 Randbereich
6 Zentralbereich
7 Trennmittel
8 Haftvermittler
B1 erste Band- oder Blechanordnung
B2 zweite Band- oder Blechanordnung
Z1 erstes Zwischenprodukt
Z2 zweites Zwischenprodukt
P1 erstes plattiertes Band
P2 zweites plattiertes Band

Zunächst wird auf Fig. 1 bis 3, dem Stand der Technik gemäß DE 102 58 824 B3, Bezug genommen.

Fig. 1 zeigt im Querschnitt eine rechteckige Band- oder Blechanordnung mit einem Trägerband T und Füllbändern F vor dem Plattieren. Die Band- oder Blechanordnung ist aus fünf verschiedenen Bändern zusammengesetzt, die durch einen Walzplattiervorgang miteinander verbunden werden sollen.

Das Trägerband T besteht aus einem ersten Werkstoff und erstreckt sich über die gesamte Breite der herzustellenden plattierten Band- oder Blechanordnung. Es sind ferner zwei Auflagebänder A und zwei Füllbänder F vorgesehen. Die zwei Auflagebänder A und zwei Füllbänder F sind untereinander gleich dick, jedoch schmaler als das Trägerband T. Die zwei Auflagebänder A und Füllbänder F sind zusammengenommen jedoch genauso breit wie das Trägerband T.

Die Füllbänder F unterscheiden sich hinsichtlich ihres Werkstoffes von dem Trägerband T und den Auflagebändern A. Bei dem Werkstoff des Trägerbandes T und der Auflagebänder A kann es sich zum Beispiel um Kupfer oder eine Kupferlegierung handeln, bei dem Werkstoff der Füllbänder F kann es sich zum Beispiel um Silber oder eine Silberlegierung handeln. Das Trägerband T, die Auflagebänder A und Füllbänder F werden in der bekannten Weise walzplattiert. Als Ergebnis ergibt sich eine Zwischenstufe für das herzustellende plattierte Band.

Im Walzspalt wird die Bänderanordnung gemäß Fig. 1 um die Stichabnahme in der Dicke reduziert. Die Darstellung in Fig. 2 stellt somit, abgesehen von der sich durch den Walzvorgang ändernden Dicke, eine Zwischenstufe mit Füllbändern für das herzustellende plattierte Band dar.

Zur Erlangung des gewünschten Bandes mit in Querrichtung unterschiedlichen Querschnitten, werden die Füllbänder F nach dem Plattieren aus der Zwischenstufe gelöst. Im Ergebnis ergibt sich eine plattierte Band- oder Blechanordnung gemäß Fig. 3, welche nur noch aus dem Trägerband T und den beiden Auflagebändern A besteht.

Ein Verfahren zur Herstellung mindestens eines plattierten Bandes oder Bleches gemäß der vorgeschlagenen Erfindung kommt grundsätzlich ohne die oben beschriebenen Füllbänder aus. Vielmehr werden in dem vorgeschlagenen Verfahren eine erste Band- oder Blechanordnung B1, umfassend ein Trägerband 1 und mindestens ein Auflageband 2, und eine zweite Band- oder Blechanordnung B2, umfassend ein Trägerband 3 und mindestens ein Auflageband 4 zusammengeführt. In einem nachfolgenden Verfahrensschritt wird die erste Band- oder Blechanordnung B1 und die zweite Band- oder Blechanordnung B2 zu einem im Querschnitt rechteckförmigen oder im Wesentlichen rechteckförmigen ersten Zwischenprodukt Z1 zusammengeführt. Die Auflagebänder 2, 4 sind entsprechend zwischen den Trägerbändern 1, 3 angeordnet. Dies kann separat, aber auch in einem gemeinsamen Verfahrensschritt vorgenommen werden.

Im Wesentlichen kommt es darauf an, zwei Band- oder Blechanordnungen B1, B2 so zu gestalten, dass sie zusammengefügt ein Zwischenprodukt Z1 mit einem rechteckförmigen Querschnitt ausbilden. Anders ausgedrückt, es kommt darauf an, aus Einzelbändern ein Band oder Blech zusammenzusetzen, welches wie ein herkömmliches massives Band oder Blech bearbeitet, insbesondere gewalzt oder gepresst, werden kann. Die Querschnittsform der einzelnen Band- oder Blechanordnung ist dabei unerheblich, solange sich die beiden Band- oder Blechanordnungen zu einem im Querschnitt rechteckförmigen Zwischenprodukt Z1 vereinigen lassen. Es bietet sich aber an, die Band- oder Blechanordnungen antisymmetrisch auszubilden, d.h. zwei identische Band- oder Blechanordnungen ergänzen sich genau dann zu einem rechteckigen Querschnitt, wenn die Band- oder Blechanordnung so beschaffen ist, dass sich nach einer Drehung um 180° um eine in der Mitte der Anordnung parallel zur Walzrichtung verlaufende Achse eine "invertierte" Anordnung der Auflagebänder ergibt (d.h. dort, wo vorher ein Auflageband war, ist nach der Drehung keins mehr und umgekehrt). Hierzu wird insbesondere auf das Beispiel in Fig. 4 verwiesen.

Das erste Zwischenprodukt Z1 wird beispielsweise gewalzt, gepresst oder mit einem anderen zum plattieren geeigneten Verfahren bearbeitet. Hieraus ergibt sich ein zweites Zwischenprodukt Z2 mit einem plattierten ersten Band P1 aus der ersten Band- oder Blechanordnung B1 und einem plattierten zweiten Band P2 aus der zweiten Band- oder Blechanordnung B2. Die zwei Band- oder Blechanordnungen B1, B2 werden gewissermaßen in einem gemeinsamen Plattiervorgang plattiert.

Nach dem Plattieren kann, insbesondere wenn es sich um Kaltwalzplattieren handelt, eine Wärmebehandlung zur Erzielung der erforderlichen Haftfestigkeit von Trägerband 1 und dem mindestens einen Auflageband 2 bzw. dem Trägerband 3 und dem mindestens einen Auflageband 4 erfolgen.

In einem weiteren Verfahrensschritt werden die beiden plattierten Band- oder Blechanordnungen, sprich die nunmehr plattierten Bänder P1, P2 voneinander getrennt. Die so entstandenen Bänder P1, P2 sind separat nutzbar, jedoch gemeinsam plattiert worden. Es liegt auf der Hand, dass hierdurch Zeit und Produktionskosten eingespart werden können. Es werden bis zum Zeitpunkt der Separation immer mindestens zwei Band- oder Blechanordnungen B1, B2 gleichzeitig verarbeitet, was gegenüber dem Stand der Technik einer annährenden Halbierung der Fertigungskosten gleichkommt.

Weitere Verfahrensschritte bzw. Zwischenschritte sind möglich.

Wenngleich die vorausgegangenen und noch folgenden Ausführungen im Wesentlichen auf plattierte Bänder, Bandanordnungen etc. abstellen, ist das Verfahren auch ebenso auf Bleche und entsprechend Blechanordnungen etc. anwendbar. Aus Gründen der Übersicht wird jedoch darauf verzichtet, auf die Verarbeitung von Blechen näher einzugehen.

Es kann vorteilhafterweise eine Verbindung zwischen der ersten Band- oder Blechanordnung B1 und der zweiten Band- oder Blechanordnung B2, insbesondere in einem Randbereich 5, vorgesehen werden. Die Verbindung findet vorzugsweise während des Plattierens statt. Dies kann beispielsweise durch Haftvermittler 8, wie beispielweise reaktive Metallpulver, insbesondere Titanpulver, Aluminiumpulver, Kupferpulver, Nickelpulver bzw. deren Legierungen und/oder Edelstahlpulver, erreicht oder unterstützt werden. Denkbar sind auch dünne Metallbänder oder -schichten, insbesondere aus Aluminium, Kupfer, Nickel, Titan bzw. deren Legierungen, oder auch Edelstahl. Auch kann gänzlich ohne die vorgenannten Haftvermittler 8 während des Plattierprozesses im Randbereich 5 Haftung entstehen, wobei insbesondere auf Trennmittelfreiheit in diesem Bereich geachtet werden sollte. Die Verbindung kann auch vor dem Plattieren vorgenommen werden. Die Randhaftung sorgt für einen ausreichenden Zusammenhalt des Zwischenproduktes Z1 während des Plattierprozesses bzw. des Zwischenproduktes Z2, so dass insbesondere das zweite Zwischenprodukt Z2 den üblichen weiteren Verarbeitungsschritten für Metallbänder unterzogen werden kann, z.B. Wärmebehandlung, Kaltwalzen etc.

Es können ferner aber auch Trennmittel 7 eingesetzt werden. So kann beispielsweise im Zentralbereich 6 des ersten Zwischenprodukts Z1 und des zweiten Zwischenproduktes Z2 die Haftung durch ein Trennmittel 7 derartig partiell unterdrückt werden, dass nach Entfernen der haftenden Randbereiche 5 eine Separation in ein erstes plattiertes Band P1 und ein zweites plattiertes Band P2 mit über die Breite variierenden Querschnitten und Eigenschaften möglich wird. Das verwendete Trennmittel 7 sollte speziell auf die Anforderungen des Plattierprozesses und ggf. einer Wärmebehandlung abgestimmt sein und darf insbesondere keine Gase freisetzen oder die Werkstoffe, auf die es aufgebracht ist, in ihrer Zusammensetzung nachteilig verändern. Als Trennmittel 7 bieten sich daher Modifikationen des Kohlenstoffs, z.B. Graphit und/oder keramische Pulver an, z.B. Oxide, Nitride oder Carbide von Al, Si, B oder Refraktärmetallen, in Mischung mit zum Auftragen benötigten Hilfsstoffen. Das Auftragen kann durch Sprühen, partielles Coil-Coating oder Druckverfahren wie z.B. Siebdruck kontinuierlich auf die zum Plattieren vorzugsweise bereits vorbehandelte (d.h. entfettete und ggf. geschliffene bzw. gebürstete) erste Band- oder Blechanordnung B1 bzw. zweite Band- oder Blechanordnung B2 geschehen. Um Blasenbildungen bei der Wärmebehandlung durch über Rauhigkeiten oder Hohlräume im Zentralbereich 6, insbesondere zwischen den einzelnen vertikalen Seitenflächen der Auflagebänder, eingeschleppte Luft zu vermeiden, können dem Trennmittel 7 auch reaktive Bestandteile (z.B. Pulver von Refraktärmetallen) beigesetzt werden, die einen zu großen Druckaufbau durch chemisches Abbinden von Restgasen verhindern.

Sollte die Haftung der Randbereiche 5 allein für die Stabilität des zweiten Zwischenproduktes Z2 in der Weiterverarbeitung nicht ausreichen, so können durch lokale Lücken in den Trennschichten 7, sprich in den ansonsten nicht haftenden Bereichen, zusätzliche punktuell haftende Stellen zur Stabilisierung erzeugt werden. Haben diese nur geringe laterale Abmessungen, so können die beiden plattierten Bänder P1, P2 des zweiten Zwischenproduktes Z2 immer noch unter Zerstörung dieser Stellen separiert werden.

Um die Prozesssicherheit zu Beginn des Plattierprozesses zu verbessern und z.B. das Einschleppen von Luft in den Verbund zu vermeiden, kann anfangs auf die Trennschicht 7 und ggf. auch auf das Längsteilen der Auflagebänder, falls diese so aus einem breiteren Auflagebands erzeugt werden, verzichtet werden, so dass zunächst eine über die Breite maximal zusammenhängende Plattierung hergestellt wird. Diese Bereiche können so dimensioniert werden, dass sie innerhalb des ohnehin anfallenden technologischen Endenschrotts liegen und standardmäßig während der weiteren Produktion entfernt werden.

Die Beschichtung mit dem Haftvermittler 8 bzw. dem Trennmittel 7 kann direkt vor dem Einlauf des Plattiergerüsts durchgeführt werden. Die Beschichtung sollte jedoch abgeschlossen sein, bevor die erste Band- oder Blechanordnung B1 und die zweite Band- oder Blechanordnung B2 zu dem ersten Zwischenprodukt Z1 zusammengefügt sind.

Wird die erste Band- oder Blechanordnung B1 und die zweite Band- oder Blechanordnung B2, insbesondere in ihren Randbereichen 5, verbunden, muss zur Trennung der plattierten Bänder bzw. Bleche P1, P2 eine Bearbeitung des zweiten Zwischenproduktes Z2 vorgenommen werden. Diese Bearbeitung kann beispielsweise darin bestehen, dass die haftenden Randbereiche 5 einfach abgetrennt werden. Die Abtrennung der Randbereiche 5 kann an einer Längsteilanlage durchgeführt werden, an der die haftenden Randbereiche 5 durch Besäumen entfernt und beispielsweise beide Bänder auf zwei Aufhaspel gewickelt werden. Optional könnten hier zusätzlich Trennmittelreste von der Oberfläche entfernt werden.

Alternativ wäre es auch möglich, aus einem zweiten Zwischenprodukt Z2 in Bandform durch Abtafeln an einer Querteilanlage in Kombination mit einer Entfernung der haftenden Randbereiche 5 einzelne plattierte Bleche P1 und P2 herzustellen. Bis auf das Entfernen der haftenden Randbereiche 5 fällt kein über das übliche Maß hinausgehender weiterer Schrott an, wobei dieser technologisch notwendige Schrottanteil im Fall des Kaltwalzplattierens noch dadurch relativiert wird, dass hier ein Besäumen plattierter Bänder oder Bleche ohnehin gängige Praxis ist. Der haftende Randbereich 5 könnte auch auf einer Tafelschere kurz vor der Weiterverarbeitung entfernt werden. Bis auf das Entfernen der haftenden Randbereiche 5 fällt kein über das übliche Maß hinausgehender weiterer Schrott an. Die verwendeten Trennschichten 7 sorgen für eine sichere Unterdrückung der Haftung an den entsprechenden Stellen ohne die Materialauswahl einzuschränken und ermöglichen ein gefahrloses Separieren des ersten plattierten Bandes oder Bleches P1 und des zweiten plattierten Bandes oder Bleches P2 am Schluss der Fertigung, also wenn bereits eine maximale Haftfestigkeit der durch Plattieren verbundenen Bereiche besteht.

Zudem wäre denkbar, bei der Plattierung weitere Funktionsschichten mit einzubringen, z.B. als Korrosionsschutz, zur Realisierung besonderer physikalischer Eigenschaften oder als Haftvermittler. Alternativ können zu diesen Zwecken bereits vorbeschichtete Trägerbänder 1, 3 bzw. Auflagebänder 2, 4 verwendet werden.

Die Trägerbänder 1, 3 und/oder die Auflagebänder 2, 4 können aus gleichen oder verschiedenen Werkstoffen, vorzugsweise metallischen Werkstoffen, bestehen. So wären z.B. Kombinationen unterschiedlicher Stahlgüten oder unterschiedlicher Aluminiumgüten jeweils miteinander denkbar. Ebenso könnten z.B. auch Stahl und Aluminium miteinander kombiniert werden. Auch Kupfer bzw. Kupferlegierungen kommen in Frage. Auf diese Weise können über die Breite variierende physikalische oder mechanisch-technologische Eigenschaften erzeugt werden.

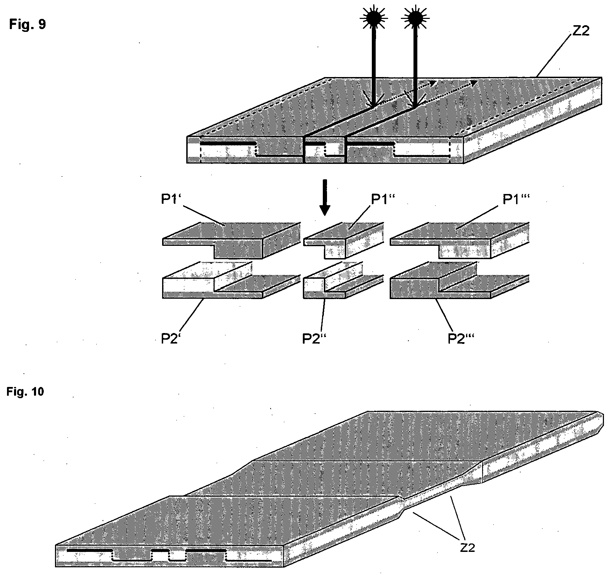

In den vorgenannten Ausführungen wird davon ausgegangen, dass die zwei Band- oder Blechanordnungen B1, B2 und die daraus hervorgehenden zwei plattierten Bänder P1, P2 im Wesentlichen die gewünschten Endprodukte darstellen. Es ist jedoch ebenfalls denkbar, dass die Band- oder Blechanordnungen B1, B2 bereits so zusammengestellt werden, dass sich mehrere gewünschte plattierte Bänder nebeneinander ergeben. Es ist insofern denkbar, dass das zweite Zwischenprodukt Z2 oder das erste plattierte Band P1 und/oder das zweite plattierte Band P2 in Längsrichtung bzw. Walzrichtung getrennt werden. Es ergeben sich entsprechend mehrere plattierte Teilbänder P1', P1", P1'" und P2', P2" und P3'". Für die Längsteilung würde sich hier z.B. das Rollmesserschneiden oder das Laserschneiden als Trennverfahren anbieten. Eine derartige Trennung ist in der Fig. 9 angedeutet.

Es wäre ebenso denkbar, eine Längsteilung direkt im Einlauf des Plattiergerüsts durchzuführen. Insofern kann die Bereitstellung der Auflagebänder von B1 und B2 durch Längsteilen eines breiteren Bandes vorgenommen werden, wodurch erhebliche Kostenvorteile bei der Modifikation bestehender Plattiergerüste erzielt werden können. Bestehende Gerüste können normalerweise drei Bänder dem Prozess gleichzeitig zuführen. Um die Erfindung möglichst einfach auf üblichen Anlagen umzusetzen, könnten die Auflagebänder daher entweder durch Längsteilen eines breiteren Bandes, welches von nur einem Abhaspel bereitgestellt werden muss, in Linie im Einlauf des Plattiergerüsts erzeugt werden. Alternativ kann dies auch auf einer separaten Anlage durch Längsteilen und Aufwickeln auf eine Hülse erfolgen, wobei in beiden Fällen natürlich jeweils noch eine Trennmittelbeschichtung vorgenommen werden müsste. So können dann ohne zusätzliche Abhaspel alle Auflagebänder zugeführt werden.

Das zweite Zwischenprodukt Z2 kann auch, insbesondere aufgrund der haftenden Randbereiche und des rechteckigen Querschnitts, beispielsweise durch Kaltwalzen mit flexiblem Dickenprofil über die Bandlänge weiterverarbeitet werden. Dadurch entstehen in sowohl längs als auch quer zur Walzrichtung gestufte plattierte Bänder. Ein derartiges zweites Zwischenprodukt ist in Fig. 10 dargestellt.

Das erfindungsgemäße Verfahren kann sich insbesondere dadurch auszeichnen, dass die Dicken der Auflagebänder 2, 4 so gewählt sind, dass sie nach dem Plattieren nur noch um maximal 10%, vorzugsweise maximal 5%, von ihrem Mittelwert abweichen.

Das erfindungsgemäße Verfahren kann sich insbesondere dadurch auszeichnen, dass das zweite Zwischenprodukt Z2 oder das erste plattierte Band bzw. Blech P1 und/oder das mindestens zweite plattierte Band bzw. Blech P2 in Längsrichtung geteilt werden, so dass sich mehrere plattierte Teilbänder P1", P1'" und P2', P2" und P3"' ergeben.

## Patentansprüche

1. Verfahren zur Herstellung mindestens eines plattierten Bandes oder Bleches, aufweisen mindestens nachfolgende Verfahrensschritte:
a) Zusammenführen einer ersten Band- oder Blechanordnung (B1), umfassend ein Trägerband (1) und mindestens ein Auflageband (2), wobei das mindestens eine Auflageband (2) eine geringere Breite als das Trägerband (1) aufweist;
b) Zusammenführen einer zweiten Band- oder Blechanordnung (B2), umfassend ein Trägerband (3) und mindestens ein Auflageband (4), wobei das mindestens eine Auflageband (4) eine geringere Breite als das Trägerband (3) aufweist;
c) Zusammenführen der ersten Band- oder Blechanordnung (B1) und der zweiten Band- oder Blechanordnung (B2) zu einem im Querschnitt rechteckförmigen oder zumindest annähernd im Querschnitt rechteckförmigen ersten Zwischenprodukt (Z1), so dass die mindestens zwei Auflagebänder (2, 4) zwischen den Trägerbändern (1, 3) angeordnet sind;
d) Herstellen eines zweiten Zwischenproduktes (Z2) durch Plattieren des ersten Zwischenproduktes (Z1) und Erzeugung eines ersten plattierten Bandes oder Bleches (P1) aus der ersten Band- oder Blechanordnung (B1) und eines zweiten plattieren Bandes oder Bleches (P2) aus der zweiten Band- oder Blechanordnung (B2);
e) Trennen des zweiten Zwischenproduktes (Z2) in ein erstes plattiertes Band oder Blech (P1) und mindestens ein zweites plattiertes Band oder Blech (P2);
**dadurch gekennzeichnet, dass**:
- im Verfahrensschritt c) die erste Band- oder Blechanordnung (B1) und die zweite Band- oder Blechanordnung (B2) antisymmetrisch zueinander ausgebildet sind und
- das nach dem Trennen des Zwischenproduktes (Z2) im Verfahrensschritt e) erhaltene erste plattierte Band oder Blech (P1) gestuft ist und das erhaltene mindestens eine zweite Band oder Blech (P2) gestuft ist.

2. Verfahren nach Anspruch 1, **dadurch gekennzeichnet, dass** als Material des Trägerbandes (1, 3) und/oder des Auflagebandes (2, 4) Stahl oder Stahllegierungen, Kupfer oder Kupferlegierungen, Edelmetalle oder Edelmetalllegierungen, Aluminium oder Aluminiumlegierungen und/oder Nickel oder Nickellegierungen verwendet werden.

3. Verfahren nach mindestens einem der vorhergehenden Ansprüche, **dadurch gekennzeichnet, dass** mindestens ein Trägerband (1, 3) oder Auflageband (2, 4) aus einem anderen Material als die übrigen Trägerbänder oder Auflagebänder besteht.

4. Verfahren nach mindestens einem der vorhergehenden Ansprüche, **dadurch gekennzeichnet, dass** es sich bei dem Plattieren um Walzplattieren, vorzugsweise um Kaltwalzplattieren, ggf. mit zusätzlichen Maßnahmen wie Band- bzw. Blechvorwärmung, handelt.

5. Verfahren nach mindestens einem der vorhergehenden Ansprüche, **dadurch gekennzeichnet, dass** die erste Band- oder Blechanordnung (B1) und die zweite Band- oder Blechanordnung (B2) mindestens in einem Randbereich (5) verbunden werden.

6. Verfahren nach mindestens einem der vorhergehenden Ansprüche, **dadurch gekennzeichnet, dass** die erste Band- oder Blechanordnung (B1) und/oder die zweite Band- oder Blechanordnung (B2) mindestens teilweise, vorzugsweise in einem Randbereich (5), mit einem Haftvermittler (8) beschichtet wird.

7. Verfahren nach mindestens einem der vorhergehenden Ansprüche, **dadurch gekennzeichnet, dass** die erste Band- oder Blechanordnung (B1) und/oder die zweite Band- oder Blechanordnung (B2) mindestens teilweise, vorzugsweise in einem zentralen Bereich (6), mit einem Trennmittel (7) beschichtet wird.

8. Verfahren nach mindestens einem der vorhergehenden Ansprüche, **dadurch gekennzeichnet, dass** lokale Lücken in dem mit Trennmittel (7) beschichteten Bereich (6) erzeugt werden.

9. Verfahren nach mindestens einem der vorhergehenden Ansprüche, **dadurch gekennzeichnet, dass** die Bestandteile des ersten Zwischenprodukt (Z1) vor dem Plattieren durch thermisches Fügen, insbesondere Schweißen, an mindestens einer Stelle fixiert oder verbunden werden.

10. Verfahren nach mindestens einem der vorhergehenden Ansprüche, **dadurch gekennzeichnet, dass** das Trennmittel (7) Modifikationen des Kohlenstoffs, z.B. Graphit und/oder keramische Pulver, z.B. Oxide, Nitride oder Carbide von Al, Si, B oder Refraktärmetallen, auch in Mischung mit zum Auftragen benötigten Hilfsstoffen aufweist.

11. Verfahren nach mindestens einem der vorhergehenden Ansprüche, **dadurch gekennzeichnet, dass** das zweite Zwischenprodukt (Z2) vor der Trennung im Verfahrensschritt(e) mindestens einem für metallische Bänder oder Bleche üblichen Verarbeitungsschritt unterzogen wird, insbesondere Warmwalzen, Kaltwalzen und/oder Wärmebehandeln.

12. Verfahren nach mindestens einem der vorhergehenden Ansprüche, **dadurch gekennzeichnet, dass** dem Trenn- und/oder Haftvermittler (7, 8) reaktive Bestandteile, z.B. metallische Pulver, insbesondere Refraktärmetalle, beigesetzt werden, die insbesondere in der Lage sind, während einer Wärmebehandlung Restgase (beispielsweise O₂, N₂, CO₂, H₂O) zumindest partiell chemisch zu binden.

13. Verfahren nach mindestens einem der vorhergehenden Ansprüche, **dadurch gekennzeichnet, dass** der Trennung des zweiten Zwischenproduktes (Z2) eine Abtrennung der Randbereiche (5) vorausgeht.

14. Verfahren nach mindestens einem der vorhergehenden Ansprüche, **dadurch gekennzeichnet, dass** die Auflagebänder (2, 4) erst kurz vor dem Plattieren durch Längsteilen in Linie aus einem breiteren Auflageband erzeugt werden.

15. Verfahren nach einem der vorhergehenden Ansprüche, **dadurch gekennzeichnet, dass** die Dicken der Auflagebänder (2, 4) so gewählt sind, dass sie vor dem Plattieren um maximal 30%, vorzugsweise um maximal 20%, von ihrem Mittelwert abweichen.

## Claims

1. Method for producing at least one clad strip or sheet, having at least the following method steps:
a) bringing together a first strip arrangement or sheet arrangement (B1) comprising a support strip (1) and at least one deposit strip (2), wherein the at least one deposit strip (2) is narrower than the support strip (1);
b) bringing together a second strip arrangement or sheet arrangement (B2) comprising a support strip (3) and at least one deposit strip (4), wherein the at least one deposit strip (4) is narrower than the support strip (3);
c) bringing together the first strip arrangement or sheet arrangement (B1) and the second strip arrangement or sheet arrangement (B2) to give a first intermediate product (Z1) of rectangular or at least approximately rectangular cross-section, such that the at least two deposit strips (2, 4) are arranged between the support strips (1, 3);
d) producing a second intermediate product (Z2) by cladding the first intermediate product (Z1), and generating a first clad strip or sheet (P1) from the first strip arrangement or sheet arrangement (B1) and generating a second clad strip or sheet (P2) from the second strip arrangement or sheet arrangement (B2);
e) separating the second intermediate product (Z2) into a first clad strip or sheet (P1) and at least one second clad strip or sheet (P2);
**characterized in that**
- in method step c) the first strip arrangement or sheet arrangement (B1) and the second strip arrangement or sheet arrangement (B2) are formed anti-symmetrically with respect to one another, and
- the first clad strip or sheet (P1) obtained after separation of the intermediate product (Z2) in method step e) is stepped and the obtained at least one second strip or sheet (P2) is stepped.

2. Method according to Claim 1, **characterized in that** as material for the support strip (1, 3) and/or for the deposit strip (2, 4), use is made of steel or steel alloys, copper or copper alloys, noble metals or noble metal alloys, aluminium or aluminium alloys and/or nickel or nickel alloys.

3. Method according to either of the preceding claims, **characterized in that** at least one support strip (1, 3) or deposit strip (2, 4) is made of a different material than the other support strips or deposit strips.

4. Method according to at least one of the preceding claims, **characterized in that** the cladding process is roll-cladding, preferably cold roll-cladding, possibly with additional measures such as preheating of the strip or sheet.

5. Method according to at least one of the preceding claims, **characterized in that** the first strip arrangement or sheet arrangement (B1) and the second strip arrangement or sheet arrangement (B2) are connected at least in an edge region (5).

6. Method according to at least one of the preceding claims, **characterized in that** the first strip arrangement or sheet arrangement (B1) and/or the second strip arrangement or sheet arrangement (B2) is coated at least in part, preferably in an edge region (5), with an adhesion promoter (8).

7. Method according to at least one of the preceding claims, **characterized in that** the first strip arrangement or sheet arrangement (B1) and/or the second strip arrangement or sheet arrangement (B2) is coated at least in part, preferably in a central region (6), with a parting agent (7).

8. Method according to at least one of the preceding claims, **characterized in that** local gaps are generated in the region (6) coated with the parting agent (7).

9. Method according to at least one of the preceding claims, **characterized in that**, prior to cladding, the constituent parts of the first intermediate product (Z1) are fixed or connected at at least one point by thermal joining, in particular welding.

10. Method according to at least one of the preceding claims, **characterized in that** the parting agent (7) has modifications of carbon, e.g. graphite and/or ceramic powders, e.g. oxides, nitrides or carbides of Al, Si, B or refractory metals, also in a mixture with additives required for application.

11. Method according to at least one of the preceding claims, **characterized in that**, prior to the separation in method step e), the second intermediate product (Z2) undergoes at least one processing step which is conventional for metallic strips or sheets, in particular hot rolling, cold rolling and/or heat treatment.

12. Method according to at least one of the preceding claims, **characterized in that** reactive constituents, e.g. metallic powders, in particular refractory metals, are added to the parting and/or adhesion promoter (7, 8) and are in particular able to at least partially chemically bind residual gases (for example O₂, N₂, CO₂, H₂O) during heat treatment.

13. Method according to at least one of the preceding claims, **characterized in that** the separation of the second intermediate product (Z2) is preceded by removal of the edge regions (5).

14. Method according to at least one of the preceding claims, **characterized in that** the deposit strips (2, 4) are generated only shortly prior to cladding by longitudinal division in line from a broader deposit strip.

15. Method according to at least one of the preceding claims, **characterized in that** the thicknesses of the deposit strips (2, 4) are chosen such that, prior to cladding, they deviate from their average value by at most 30%, preferably by at most 20%.

## Revendications

1. Procédé de fabrication d'au moins une bande ou tôle plaquée, comprenant au moins les étapes de procédé suivantes :
a) l'assemblage d'un premier agencement de bande ou de tôle (B1), comprenant une bande support (1) et au moins une bande de revêtement (2), ladite au moins une bande de revêtement (2) présentant une largeur plus faible que la bande support (1) ;
b) l'assemblage d'un second agencement de bande ou de tôle (B2), comprenant une bande support (3) et au moins une bande de revêtement (4), ladite au moins une bande de revêtement (4) présentant une largeur plus faible que la bande support (3) ;
c) l'assemblage du premier agencement de bande ou de tôle (B1) et du second agencement de bande ou de tôle (B2) pour former un premier produit intermédiaire (Z1) de section rectangulaire ou au moins de section approximativement rectangulaire, de sorte que lesdites au moins deux bandes de revêtement (2, 4) soient agencées entre les bandes supports (1, 3) ;
d) la fabrication d'un second produit intermédiaire (Z2) par plaquage du premier produit intermédiaire (Z1) et formation d'une première bande ou tôle plaquée (P1) à partir du premier agencement de bande ou de tôle (B1) et d'une seconde bande ou tôle plaquée (P2) à partir du second agencement de bande ou de tôle (B2) ;
e) la séparation du second produit intermédiaire (Z2) en une première bande ou tôle plaquée (P1) et au moins une seconde bande ou tôle plaquée (P2) ;
**caractérisé en ce que**
- lors de l'étape de procédé c), le premier agencement de bande ou de tôle (B1) et le second agencement de bande ou de tôle (B2) sont configurés sous forme asymétrique l'un par rapport à l'autre, et
- la première bande ou tôle plaquée (P1) obtenue après la séparation du produit intermédiaire (Z2) à l'étape de procédé e) est échelonnée et ladite au moins une seconde bande ou tôle (P2) obtenue est échelonnée.

2. Procédé selon la revendication 1, **caractérisé en ce que** de l'acier ou des alliages d'acier, du cuivre ou des alliages de cuivre, des métaux nobles ou des alliages de métaux nobles, de l'aluminium ou des alliages d'aluminium et/ou du nickel ou des alliages de nickel sont utilisés en tant que matériau de la bande support (1, 3) et/ou de la bande de revêtement (2, 4).

3. Procédé selon au moins l'une quelconque des revendications précédentes, **caractérisé en ce qu'**au moins une bande support (1, 3) ou bande de revêtement (2, 4) est constituée d'un autre matériau que les autres bandes supports ou bandes de revêtement.

4. Procédé selon au moins l'une quelconque des revendications précédentes, **caractérisé en ce que** le placage est un placage au rouleau, de préférence un placage au rouleau à froid, éventuellement avec des mesures supplémentaires telles qu'un préchauffage de la bande ou de la tôle.

5. Procédé selon au moins l'une quelconque des revendications précédentes, **caractérisé en ce que** le premier agencement de bande ou de tôle (B1) et le second agencement de bande ou de tôle (B2) sont reliés au moins dans une zone de bord (5).

6. Procédé selon au moins l'une quelconque des revendications précédentes, **caractérisé en ce que** le premier agencement de bande ou de tôle (B1) et/ou le second agencement de bande ou de tôle (B2) sont revêtus au moins en partie, de préférence dans une zone de bord (5), avec un promoteur d'adhésion (8).

7. Procédé selon au moins l'une quelconque des revendications précédentes, **caractérisé en ce que** le premier agencement de bande ou de tôle (B1) et/ou le second agencement de bande ou de tôle (B2) sont revêtus au moins en partie, de préférence dans une zone centrale (6), avec un agent de séparation (7).

8. Procédé selon au moins l'une quelconque des revendications précédentes, **caractérisé en ce que** des espaces locaux sont formés dans la zone (6) revêtue avec l'agent de séparation (7).

9. Procédé selon au moins l'une quelconque des revendications précédentes, **caractérisé en ce que** les constituants du premier produit intermédiaire (Z1) sont fixés ou reliés avant le plaquage par jointoyage thermique, notamment soudure, à au moins un emplacement.

10. Procédé selon au moins l'une quelconque des revendications précédentes, **caractérisé en ce que** l'agent de séparation (7) comprend des modifications de carbone, p. ex. le graphite, et/ou des poudres céramiques, p. ex. des oxydes, des nitrures ou des carbures d'Al, Si, B ou de métaux réfractaires, également en mélange avec des adjuvants nécessaires pour l'application.

11. Procédé selon au moins l'une quelconque des revendications précédentes, **caractérisé en ce que** le second produit intermédiaire (Z2) est soumis à au moins une étape d'usinage usuelle pour les bandes métalliques ou les tôles avant la séparation à l'étape de procédé (e), notamment un cylindrage à chaud, un cylindrage à froid et/ou un traitement thermique.

12. Procédé selon au moins l'une quelconque des revendications précédentes, **caractérisé en ce que** des constituants réactifs (p. ex. des poudres métalliques, notamment des métaux réfractaires) sont ajoutés à l'agent de séparation et/ou au promoteur d'adhésion (7, 8), qui sont notamment en mesure de se lier chimiquement au moins en partie à des gaz résiduels (par exemple O₂, N₂, CO₂, H₂O) pendant un traitement thermique.

13. Procédé selon au moins l'une quelconque des revendications précédentes, **caractérisé en ce que** la séparation du second produit intermédiaire (Z2) est précédée par une séparation des zones de bord (5).

14. Procédé selon au moins l'une quelconque des revendications précédentes, **caractérisé en ce que** les bandes de revêtement (2, 4) ne sont formées que peu avant le placage par division longitudinale en ligne à partir d'une bande de revêtement plus large.

15. Procédé selon au moins l'une quelconque des revendications précédentes, **caractérisé en ce que** les épaisseurs des bandes de revêtement (2, 4) sont choisies de sorte qu'elles diffèrent de leur valeur moyenne avant le placage d' au plus 30 %, de préférence d'au plus 20 %.
